# EUROPÄISCHE PATENTANMELDUNG

(11) **EP 3 757 441 A1**
(43) Veröffentlichungstag der Anmeldung: **30.12.2020**
(21) Anmeldenummer: 19182390.5
(22) Anmeldetag: 25.06.2019
(51) Int. Cl.: F16L 57/06

(54) **VERFAHREN ZUR REPARATUR EINES HOCHFESTEN FASERSEILS**

(71) Anmelder: Teufelberger Fiber Rope GmbH, 4600 Wels (AT)
(72) Erfinder: ERNST, Björn, 4810 Gmunden (AT); RÜHRNÖSSL, Erich, 4053 Haid (AT); TRAXL, Robert, 4802 Ebensee (AT); KAISER, Gunter, 4600 Thalheim/Wels (AT)
(74) Vertreter: Nemec, Harald

(57) **Zusammenfassung**

Die Erfindung betrifft ein Verfahren zur Reparatur eines hochfesten Faserseils (1), insbesondere eines hochfesten Faser-Hubseils für Krane, welches einen Seilkern (2), der hochfeste Kunststofffasern oder -litzen umfasst, und einen lokal beschädigten textilen Mantel (3) aufweist, das Verfahren umfassend:
- Bereitstellen eines flächigen, rechteckigen Textils (5) mit zwei Breitseiten (B), die jeweils eine Länge von 80% bis 120% eines Umfangs des Faserseils (1) aufweisen, und zwei Längsseiten (L), die jeweils zumindest eine Länge eines zu reparierenden Schadens (4) des beschädigten Mantels (3) aufweisen,
- Positionieren des Textils (5) auf dem Faserseil (1), sodass die Längsseiten (L) des Textils (5) entlang einer Längsrichtung (R) des Faserseils (1) und die Breitseiten (B) des Textils (5) um den Umfang (U) des Faserseils (1) verlaufen und das Textil (5) den zu reparierenden Schaden (4) überdeckt,
- Verbinden der Längsseiten (L) des Textils (5), und
- Vernähen des Textils (5) mit dem Mantel (3).

## Beschreibung

Die Erfindung betrifft ein Verfahren zur Reparatur eines hochfesten Faserseils, insbesondere eines hochfesten Faser-Hubseils für Krane, welches einen Seilkern, der hochfeste Kunststofffasern oder -litzen umfasst, und einen lokal beschädigten textilen Mantel aufweist.

In weiteren Aspekten betrifft die Erfindung ein hochfestes Faserseil, welches mit dem erfindungsgemäßen Verfahren repariert wurde, und eine Verwendung eines flächigen, rechteckigen Textils zur Reparatur eines hochfesten Faserseils.

Hochfeste Faserseile in Kern-Mantel-Konstruktion werden in verschiedenen Anwendungen zum Heben von Lasten verwendet, z.B. als Hubseile in Kranen, siehe z.B. die WO 2016/071184, und bei der Montage von Hochspannungsleitungen oder von Seilbahnseilen aus Stahl. Bei diesen Anwendungen werden die hochfesten Faserseile als "laufende Seile" eingesetzt, die im Betrieb über Rollen laufen.

Im laufenden Einsatz kann jedoch ein Kontakt mit Störgeometrien wie z.B. scharfen Kanten nicht ausgeschlossen werden, wie sie beispielsweise durch Seitenwinde, Bedienfehler am Kran oder überschneidende Arbeitsbereiche mehrerer Krane auf Baustellen verursacht werden. Die Mäntel der hochfesten Faserseile können daher insbesondere lokal erheblichen Schaden nehmen.

Im Einsatz auf Turmdrehkranen sind die häufigste Ursache für Seilmäntelschäden Kollisionen des Seils mit Bauteilen des Bauwerks bzw. Kollisionen mit anderen Gerätschaften auf der Baustelle. Hierbei kommt es häufig vor, dass das Seil über eine Gebäudekante oder entlang einer Gebäudekante gezogen wird und somit der Seilmantel lokal beschädigt wird.

Im Einsatz auf Mobilkranen kann es überdies zu lokalen Beschädigungen des Seilmantels während eines Umschervorgangs des hochfesten Faserseils durch Schleifen des Seils über den Boden oder durch Kontakt mit scharfen Kanten an der Hakenflasche kommen.

Um das Seil weiterhin verwenden zu können, sind verschiedene Verfahren zur Reparatur bekannt, mit denen das Seil wieder in einen funktionstüchtigen Zustand gebracht werden kann, sofern der Seilkern unbeschädigt und der Schaden am Mantel lokal begrenzt ist.

Reparaturen werden in den meisten Fällen nur dann durchgeführt, wenn der Schaden einem erst kürzlich aufgetretenen Schadensereignis zugeordnet werden kann.

Gemäß einem bekannten Reparaturverfahren kann der Mantel mit einem Takling wiederhergestellt werden. Dabei wird im Wesentlichen die lokal beschädigte Stelle des Mantels mit einem Takelgarn umwickelt und wie dem Fachmann bekannt speziell verknüpft. Das ordnungsgemäße Setzen eines Taklings ist jedoch sehr aufwändig und durch zu loses Wickeln besteht die Gefahr des Lockerns und anschließenden Aufschiebens des Taklings, insbesondere weil die Reparatur am Seil in der Regel nicht unter Last durchgeführt wird und das Seil im weiteren Einsatz belastet wird und dabei eine Längsdehnung und damit einhergehende Querkontraktion erfährt.

Eine weitere Möglichkeit für die Reparatur ist das lokale Ausbessern mit TPU (Thermoplastisches Polyurethan), welches jedoch die Nachteile einer langen Aushärtezeit, in der Regel einige Stunden, und der notwendigen Hitze für die chemische Vernetzung mit sich bringt.

Eine dritte bekannte Option besteht in der Nutzung von Seilschonern, die lokal rund um das Seil gelegt werden und mit einem Klettverschluss fixiert werden. Jedoch neigen diese Seilschoner zum Verrutschen und sind insbesondere für die Anwendung bei Hubseilen von Kranen zu dick. Denn hochfeste Faserseile auf Kranen müssen, wenn sie in Seiltrieben mit Mehrlagenwicklung eingesetzt werden, enge Toleranzgrenzen bezüglich ihres Durchmessers einhalten, damit sie im Einsatz ordnungsgemäß funktionieren. Der Einsatz eines zu dicken zusätzlichen Mantels oder Seilschoners würde die Wickelqualität des Seils in der Mehrlagenwicklung auf der Seiltrommel deutlich beeinträchtigen.

Weiters ist aus dem Segelsport bekannt, einen zusätzlichen Mantel überzuziehen, was jedoch für hochfeste Faserseile insbesondere für den Einsatz bei Kranen nicht geeignet ist. Derartige Seile sind zu lang und ferner kann der zusätzliche Mantel nicht im Betrieb des Kranes montiert werden, da die Seile für ein Überziehen des Mantels komplett aus dem Seiltrieb ausgebaut werden müssen. Insbesondere weisen Hubseile in der Regel zudem eine Endverbindung wie beispielsweise eine Vergusshülse auf, wodurch das Überziehen mit einem neuen Mantel nicht zweckhaft ist.

Es ist daher die Aufgabe der vorliegenden Erfindung, ein Verfahren zur Reparatur eines hochfesten Faserseils, insbesondere eines hochfesten Faser-Hubseils für Krane, bereitzustellen, mit welchem ein lokal beschädigter Mantel des Faserseils wiederhergestellt werden kann und die Nachteile des Standes der Technik überwunden werden können. Insbesondere soll das reparierte hochfeste Faserseil nur einen geringfügig erhöhten Durchmesser aufweisen, um nach der Reparatur in der Mehrlagenwicklung eine hohe Wickelqualität zu erhalten, einer erneuten Beschädigung an der reparierten Stelle in der gleichen Weise standhalten können und für den Lauf über Seilrollen und in der Mehrlagenwicklung geeignet sein. Ferner soll die Reparatur mit geringem Zeitaufwand und mit geringem Arbeitsaufwand, beispielsweise auf der Baustelle mit wenigen Arbeitsmitteln, durchgeführt werden können.

Die Aufgabe wird erfindungsgemäß gelöst, indem das eingangs genannte Verfahren die folgenden Schritte umfasst:
- Bereitstellen eines flächigen, rechteckigen Textils mit zwei Breitseiten, die jeweils eine Länge von 80% bis 120% eines Umfangs des Faserseils aufweisen, und zwei Längsseiten, die jeweils zumindest eine Länge eines zu reparierenden Schadens des beschädigten Mantels aufweisen,
- Positionieren des Textils auf dem Faserseil, sodass die Längsseiten des Textils entlang einer Längsrichtung des Faserseils und die Breitseiten des Textils um den Umfang des Faserseils verlaufen und das Textil den zu reparierenden Schaden überdeckt,
- Verbinden, bevorzugt permanentes Verbinden, der Längsseiten des Textils, und
- Vernähen des Textils mit dem Mantel.

Das erfindungsgemäße Verfahren erlaubt es, dass Schäden des Mantels permanent behoben werden können, ohne den Seildurchmesser erheblich zu vergrößern. Dadurch ist es weiterhin möglich, das reparierte Faserseil in seiner gewohnten Weise weiterzuverwenden, insbesondere, wenn das Faserseil dabei auf eine Seilwinde aufgewickelt oder durch kleine Öffnungen im Seiltrieb durchgeführt wird.

Zudem kann das erfindungsgemäße Verfahren schneller durchgeführt werden, als dies beispielsweise bei dem Aushärten von TPU der Fall ist. So kann insbesondere bereits während eines Kranbetriebs ein Schaden am Faserseil festgestellt und behoben werden, ohne die Kranarbeiten für einen längeren Zeitraum zu unterbrechen und ohne das gesamte Faserseil vom Kran abnehmen zu müssen.

Durch das Vernähen des Textils mit dem Mantel wird zudem erzielt, dass der Schaden auch permanent repariert wird, denn das Textil kann nicht mehr in Längsrichtung des Seils verrutschen, was insbesondere bei Seilschonern aus dem Stand der Technik ein schwerwiegendes Problem ist.

Vorzugsweise wird das Textil mit dem Mantel entlang einer der oder alternativ entlang beider Breitseiten des Textils über zumindest 25%, bevorzugt zumindest 50%, besonders bevorzugt 100%, des Umfangs vernäht. Dies erlaubt in der Praxis ein besonders schnelles und unproblematisches Vernähen des Textils mit dem Mantel, da in der Regel sichergestellt ist, dass der Mantel unter dem Textil entlang der Breitseiten unbeschädigt ist.

Alternativ oder zusätzlich zu der vorgenannten Ausführungsform wird das Textil zwischen den Breitseiten über zumindest 25%, bevorzugt zumindest 50%, besonders bevorzugt 100% des Umfangs vernäht, d.h. nicht unmittelbar an einer der Breitseiten. Dies ermöglicht beispielsweise ein Vernähen des Textils mit dem Mantel an einer Stelle, die - am Seilumfang betrachtet - hinter dem Schaden oder auch zwischen zwei lokalen Schädigungsstellen liegt. Insbesondere können in dieser Ausführungsform auch mehr als zwei Nähte vorgesehen werden, um das Textil noch sicherer am Faserseil anzubringen.

Bevorzugt erfolgt das Verbinden der Längsseiten des Textils durch Vernähen der Längsseiten. Dies stellt eine Möglichkeit dar, die Längsseiten permanent zu vernähen und ist unter anderem deshalb vorteilhaft, da dasselbe Verbindungsverfahren eingesetzt werden kann, das beim Vernähen mit dem Mantel verwendet wird. So können beispielsweise in einem ersten Vernähschritt die Längsseiten miteinander vernäht werden und in einem zweiten Vernähschritt das Textil mit dem Mantel.

In der vorgenannten Ausführungsform kann zudem vorteilhaft vorgesehen werden, dass beim Vernähen der Längsseiten gleichzeitig das Textil mit dem Mantel vernäht wird, d.h. beim Vernähen der Längsseiten miteinander wird gleichzeitig durch den Mantel genäht, um diesen mit dem Textil zu vernähen. Hier wird das Textil somit entlang der Längsrichtung des Faserseils mit dem Mantel vernäht, wobei wiederum auch ein Vernähen in Umfangsrichtung vorgesehen werden kann.

In einer vorteilhaften Ausführungsform wird zum Vernähen des Textils mit dem Mantel ein Nähgarn verwendet, das bevorzugt einen Durchmesser von weniger als 2 mm aufweist. Alternativ zu einem Nähgarn können auch andere Seilchen aus textilem Material zum Vernähen eingesetzt werden wie z.B. ein Takelgarn. Besonders bevorzugt hat das Nähgarn einen Durchmesser von weniger als 1,5 mm oder weniger als 1,0 mm. Geeignete Materialen für die Fasern eines Garns zum Vernähen sind beispielsweise PA (Polyamid), PET (Polyethylenterephthalat), PE (Polyethylen) oder HMWPE (High Molecular Weight Polyethylen) sowie Aramide oder LCP.

In einer bevorzugten Ausführungsform wird dasselbe ununterbrochene Nähgarn auch zum Verbinden der Längsseiten verwendet. Insbesondere kann zuerst eine Breitseite des Textils mit dem Mantel vernäht und daraufhin - ohne das Nähgarn abzutrennen oder zu wechseln - die Längsseiten des Textils vernäht werden und daraufhin - ohne das Nähgarn abzutrennen oder zu wechseln - die zweite Breitseite des Textils mit dem Mantel vernäht werden, was das erfindungsgemäße Verfahren besonders effizient macht.

Bevorzugt ist das Textil aus demselben Material wie der Mantel gefertigt, was insbesondere sicherstellt, dass das Faserseil auch nach der Reparatur einer erneuten Beschädigung in der gleichen Weise standhalten kann.

Alternativ weist das Textil entlang seiner Längsseiten Schlaufen auf, mittels welcher die Längsseiten verbunden werden. Dies ermöglicht erstens eine schnellere Positionierung des Textils auf dem Faserseil, da rascher zwischen Längs- und Breitseiten unterschieden werden kann, und zweitens ein vereinfachtes Verbinden der Längsseiten, da die Schlaufen beispielsweise vernäht oder verknüpft werden können.

Um das Textil insbesondere für die Reparatur von Kran-Hubseilen einsetzbar zu machen, ist die Länge der Längsseiten jeweils geringer als 100 cm und/oder entspricht die Länge der Längsseiten jeweils nicht mehr als 50%, bevorzugt nicht mehr als 5%, einer Gesamtlänge des Faserseils. Ferner ist bevorzugt die Länge der Breitseiten jeweils geringer als 80 cm. Weiters bevorzugt beträgt die Dicke D des Textils 5 maximal 25%, bevorzugt maximal 10%, besonders bevorzugt maximal 5%, des Seildurchmessers.

In weiteren Aspekten schafft die Erfindung ein hochfestes Faserseil, das mit einem der vorgenannten Verfahren repariert wurde, und eine Verwendung eines flächigen, rechteckigen Textils zur Reparatur eines hochfesten Faserseils, insbesondere eines hochfesten Faser-Hubseils für Krane, welches einen Seilkern, der hochfeste Kunststofffasern oder -litzen umfasst, und einen lokal beschädigten textilen Mantel aufweist, wobei das flächige, rechteckige Textil zwei Breitseiten, die jeweils eine Länge von 80% bis 120% eines Umfangs des Faserseils aufweisen, und zwei Längsseiten hat, die jeweils zumindest eine Länge eines zu reparierenden Schadens des beschädigten Mantels aufweisen, und wobei die Längsseiten des Textils verbindbar und das Textil mit dem Mantel vernähbar ist. Das hochfeste Faserseil und die genannte Verwendung weisen dieselben Vorteile auf, wie sie oben für das erfindungsgemäße Verfahren beschrieben wurden.

Vorteilhafte und nicht einschränkende Ausführungsformen der Erfindung werden nachfolgend anhand der Zeichnungen näher erläutert.
Fig. 1 zeigt ein hochfestes Faser-Hubseil für Krane mit einem lokal beschädigten textilen Mantel.
Fig. 2 zeigt ein Textil, das gemäß der Erfindung für die Reparatur des Faserseils von Fig. 1 verwendet wird.
Fig. 3 zeigt das Textil von Fig. 2 in einer alternativen Ausführungsform.
Fig. 4 zeigt ein gemäß der Erfindung repariertes Faserseil.

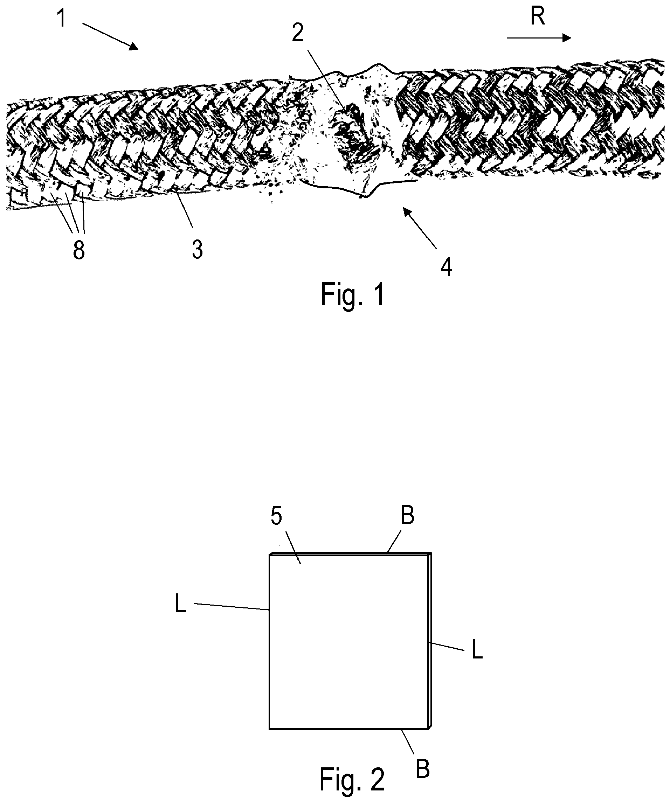

Fig. 1 zeigt ein hochfestes Faser-Hubseil 1 für Krane, wobei das Faserseil 1 einen Seilkern 2, der hochfeste Kunststofffasern oder -litzen umfasst, und einen textilen Mantel 3 aufweist, der einen lokalen Schaden 4 aufweist. Hochfeste Faserseile werden, wie dem Fachmann allgemein bekannt, aus hochfesten Kunstfasern gefertigt. Als "hochfest" werden für die Zwecke der vorliegenden Erfindung Fasern mit einer Zugfestigkeit von mindestens 14 cN/dtex, bevorzugt einer Zugfestigkeit größer 24 cN/dtex, besonders bevorzugt größer 30 cN/dtex, verstanden. Als hochfeste Faserntypen mit entsprechenden Zugfestigkeiten sind z.B. UHMWPE-Fasern (u.a. Dyneema®), Aramidfasern, LCP-Fasern und PBO-Fasern bekannt. Während das erfindungsgemäße Verfahren insbesondere bei Faser-Hubseilen 1 für Krane vorteilhaft ist, da lokale Schäden 4 insbesondere in diesem Tätigkeitsbereich auftreten können, kann das Verfahren auch für hochfeste Faserseile mit vergleichbarem Aufbau in anderen technischen Gebieten eingesetzt werden.

Bei dem hochfesten Faserseil 1 umfasst der Seilkern 2 hochfeste Kunststofffasern oder -litzen. Der Mantel 3 kann im Gegensatz dazu hochfeste oder nicht-hochfeste Fasern umfassen, beispielweise PA (Polyamid), PET (Polyethylenterephthalat), PE (Polyethylen) oder HMWPE (High Molecular Weight Polyethylen) sowie Aramide oder LCP.

Der genannte Schaden 4 kann beispielsweise auftreten, wenn das Faserseil 1 über eine Gebäudekante oder entlang einer Gebäudekante gezogen wird oder in Kontakt mit scharfen Kanten kommt. Als lokaler Schaden 4 des Mantels 3 wird beispielsweise ein Schaden bezeichnet, der maximal 5% der Seillänge ausmacht und nur am Mantel 3 vorliegt, d.h. nicht am Seilkern 2. Auch können zwei oder mehrere Schadstellen am Mantel 3 gemeinsam als Schaden 4 bezeichnet werden, wobei diese bevorzugt nicht mehr als 50% der Seillänge auseinanderliegen, besonders bevorzugt nicht mehr als 5%.

Um den Schaden 4 erfindungsgemäß zu reparieren, wird ein flächiges, rechteckiges Textil 5 bereitgestellt, das in den Fig. 2 bis 4 dargestellt ist. Das Textil 5 weist eine Dicke D, zwei Breitseiten B und zwei Längsseiten L auf. Das Textil 5 kann ein Gewebe, Gestrick, Geflecht, Gewirke, Filz oder ähnliches Flächentextil sein und auf der Grundlage von hochfesten und/oder nicht-hochfesten Fasern gefertigt werden. Bevorzugt ist das Textil 5 basierend auf denselben Fasern wie der Mantel 3 hergestellt.

Die Dicke D beträgt maximal 25% eines Durchmessers d des Faserseils 1, damit das Faserseil 1 auch im reparierten Zustand einsatzfähig bleibt. Bevorzugt kann die Dicke D maximal 10% oder maximal 5% des Seildurchmessers d betragen. Bei einem Seildurchmesser d von beispielsweise 6 mm bis 200 mm kann die Mantelstärke 0,3 mm bis 50 mm betragen.

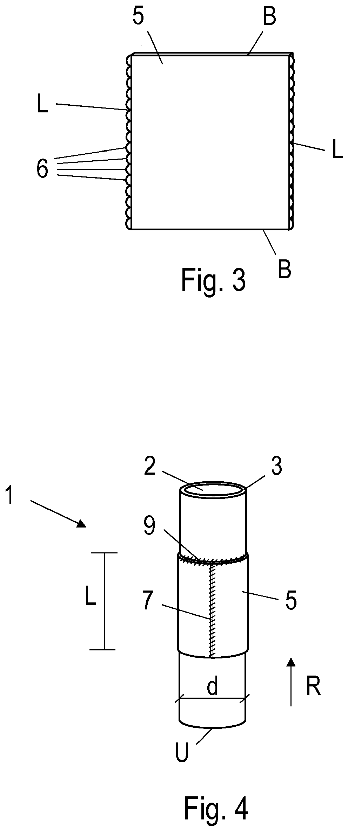

Die beiden sich gegenüberliegenden Breitseiten B weisen jeweils eine Länge von 80% bis 120% eines Umfangs U des Faserseils 1 auf, damit das Textil 5 wie in Fig. 4 gezeigt um das Faserseil 1 gewickelt werden kann, sodass die Längsseiten L im Wesentlichen bündig miteinander abschließen bzw. nur einen kleinen Spalt bilden oder nur geringfügig überlappen. Wenn die Breitseiten B jeweils weniger als 100% des Umfangs U betragen, können beispielsweise wie in Fig. 3 gezeigt Schlaufen 6 entlang der Längsseiten L vorgesehen werden, um die Längsseiten L nach der Umwicklung des Seils 1 verbindbar zu machen. Auch könnte das Textil 5 dehnbar ausgestaltet werden, sodass die Breitseiten B des Textils 5 beispielsweise in einem gedehnten Zustand 100% oder mehr des Umfangs U betragen, wodurch die Längsseiten L leichter verbindbar werden.

Die zwei Längsseiten L weisen jeweils zumindest eine Länge eines zu reparierenden Schadens 4 des beschädigten Mantels 3 auf, jedoch sind die Längsseiten L nicht länger als 50% der Gesamtlänge des Faserseils 1, bevorzugt nicht länger als 5% der Gesamtlänge des Faserseils 1. Wenn der Schaden 4 aus mehreren kleineren Schadstellen besteht, können anstatt eines langen Textils 5 mehrere kurze Textile 5 eingesetzt werden, um beispielsweise Längsseiten mit jeweils einer Länge von weniger als 5% der Gesamtlänge des Faserseils 1 zu erzielen.

Nachdem der Schaden 4 am Faserseil 1 identifiziert wurde und das passende Textil 5 bereitgestellt wurde, beispielsweise nach einer Auswahl aus mehreren Textilien mit unterschiedlich langen Längs- und Breitseiten, L, B oder nachdem das Textil 5 vor Ort hergestellt wurde, z.B. aus einem größeren Textil ausgeschnitten wurde, wird das Textil 5 auf dem Faserseil 1 positioniert.

Beim Positionieren werden Längsseiten L des Textils 5 entlang einer Längsrichtung R des Faserseils 1 und die Breitseiten B des Textils 5 um den Umfang U des Faserseils 1 gelegt, wobei darauf geachtet wird, dass der Schaden 4 überdeckt ist. Besteht der Schaden 4 wie oben erläutert aus mehreren nahe zueinander liegenden kleineren Schadstellen, wird das Textil 5 z.B. über alle kleineren Schadstellen gelegt. Der Bereich, an dem die Längsseiten L aneinanderliegen, kann prinzipiell beliebig um den Umfang des Faserseils 1 angeordnet sein, jedoch liegt dieser dem Schaden 4 - über den Umfang U des Faserseils 1 betrachtet - bevorzugt gegenüber, insbesondere wenn die Längsseiten L beim Verbinden mit dem Mantel 3 vernäht werden, wie unten im Detail erläutert.

Nachdem das Textil 5 über dem Schaden 4 positioniert wurde, werden die Längsseiten L des Textils 5 miteinander verbunden, bevorzugt permanent verbunden und nicht temporär wie bei dem Einsatz von Klettverschlüssen. Eine permanente Verbindung kann auf eine Vielzahl von verschiedenen Arten erfolgen, beispielsweise durch Vernähen der Längsseiten L miteinander mittels einer Naht 7, wie in Fig. 4 gezeigt, wobei nicht notwendigerweise der Mantel 3 mitvernäht wird. Eine weitere Möglichkeit, um die Längsseiten L zu verbinden, ist das Verbinden mittels der in Fig. 3 gezeigten Schlaufen 6, sofern vorhanden. Die Schlaufen 6 der gegenüberliegenden Längsseiten L können beispielsweise miteinander vernäht oder verknüpft werden, indem ein Garn abwechselnd durch eine Schlaufe 6 der einen Längsseite L und durch eine (gegenüberliegende) Schlaufe 6 der anderen Längsseite L geführt wird.

Nach dem Positionieren des Textils 5 auf dem Schaden 4 am Faserseil 1 und dem Verbinden der Längsseiten L wird das Textil 5 mit dem Mantel 3 vernäht, beispielsweise mit den Flechten 8 (Fig. 1) des Mantels 3. Im einfachsten Fall kann ein durch das Textil 5 hindurchgeführtes Garn in lediglich eine der Flechten 8 eingestochen werden, um das Textil 5 permanent am Mantel 3 zu befestigen, insbesondere wenn die Längsseiten L des Textils 5 derart miteinander verbunden sind, dass das Textil 5 straff auf dem Faserseil 1 angebracht ist.

Weitere Möglichkeiten zum Vernähen des Textils 5 mit dem Mantel 3 werden im Folgenden dargestellt. Wie in Fig. 4 gezeigt, kann das Textil 5 mit dem Mantel 3 mittels einer Naht 9 entlang einer der Breitseiten B des Textils 5 über den gesamten Umfang U vernäht werden. Anstatt über 100% des Umfangs U kann die Naht 9 auch nur über einen geringeren Teil des Umfangs U verlaufen, beispielsweise über 50% oder 25% des Umfangs U. Auch kann eine zweite Naht zusätzlich entlang der anderen Breitseite B verlaufen, um das Textil 5 an beiden Breitseiten B mit dem Mantel 3 zu vernähen. Hierbei müssen die Nähte nicht gleich lang sein, sondern es kann beispielsweise die Naht 9 über den gesamten Umfang U verlaufen und die andere Naht nur über einen Teil des Umfangs U.

Anstelle des Vernähens entlang einer der oder beider Breitseiten B - oder zusätzlich dazu - kann das Textil 5 zwischen den Breitseiten B über den Umfang vernäht werden, wiederum beispielsweise über 25%, 50% oder 100% des Umfangs U. Beispielsweise kann die Naht an der dem Schaden 4 gegenüberliegenden Seite am Umfang U oder zwischen zwei kleineren Schadstellen des Schadens 4 verlaufen.

Alternativ oder zusätzlich zu den oben genannten Möglichkeiten des Vernähens entlang des Umfangs U kann das Textil 5 mit dem Mantel 3 auch in Längsrichtung R des Faserseils 1 vernäht werden. Hier kann insbesondere beim Vernähen der Längsseiten L gleichzeitig das Textil 5 mit dem Mantel 3 vernäht werden, um die Schritte des Verbindens der Längsseiten L und des Vernähens des Textils 5 mit dem Mantel 3 gleichzeitig und damit zeitsparend und materialschonend durchzuführen. Bevorzugt können die Längsseiten L über ihre gesamte Länge miteinander vernäht werden, wobei das gleichzeitige Vernähen mit dem Mantel aber nur an wenigen Punkten erfolgt, z.B. bei jedem fünften Stich.

Zum Vernähen des Textils 5 mit dem Mantel 3 kann jede Art von Garn eingesetzt werden, beispielsweise ein Nähgarn oder auch ein Takelgarn. Auch das Material des Garns kann grundsätzlich frei gewählt werden, sodass das Garn beispielsweise aus PA-, PET-, PE-, HMWPE-, Aramid- oder LCP-Fasern hergestellt wird. Das Garn kann z.B. einen Durchmesser von weniger als 2 mm aufweisen, beispielsweise weniger als 1,5 mm oder weniger als 1,0 mm. In Versuchen hat sich insbesondere ein HMWPE-Takelgarn mit einem Durchmesser von 0,8 mm bewährt.

Gemäß einem Beispiel kann mit dem erfindungsgemäßen Verfahren ein hochfestes Faserseil 1 repariert werden, das einen Durchmesser von 19 mm hat und über eine Länge von 80 mm einen Schaden 4 aufweist. Hierfür kann ein Textil 5 mit Längsseiten L jeweils mit einer Länge von 90 mm und Breitseiten B jeweils mit einer Länge von 60 mm gewählt werden, wobei die Dicke D des Textils 5 1 mm beträgt.
Im Allgemeinen können Textilien 5 eingesetzt werden, bei denen die Länge der Längsseiten L jeweils geringer als 100 cm und/oder die Länge der Breitseiten B jeweils geringer als 80 cm und/oder die Dicke D geringer als 1 mm ist. Die Länge der Längsseiten L des Textils 5 wird vorzugsweise individuell an den zu behebenden Schaden 4 angepasst, beispielweise durch Schneiden gekürzt.

In der Regel werden die genannten Schritte des Verbindens der Längsseiten L des Textils 5 und des Vernähens des Textils 5 mit dem Mantel 3 in dieser Reihenfolge ausgeführt, wobei diese jedoch auch wie beschrieben gleichzeitig stattfinden können. In einigen Fällen ist es ferner auch möglich, zuerst das Textil 5 mit dem Mantel 3 zu vernähen und erst anschließend die Längsseiten L des Textils 5 zu verbinden.

## Patentansprüche

1. Verfahren zur Reparatur eines hochfesten Faserseils (1), insbesondere eines hochfesten Faser-Hubseils für Krane, welches einen Seilkern (2), der hochfeste Kunststofffasern oder -litzen umfasst, und einen lokal beschädigten textilen Mantel (3) aufweist, das Verfahren umfassend:
- Bereitstellen eines flächigen, rechteckigen Textils (5) mit zwei Breitseiten (B), die jeweils eine Länge von 80% bis 120% eines Umfangs (U) des Faserseils (1) aufweisen, und zwei Längsseiten (L), die jeweils zumindest eine Länge eines zu reparierenden Schadens (4) des beschädigten Mantels (3) aufweisen,
- Positionieren des Textils (5) auf dem Faserseil (1), sodass die Längsseiten (L) des Textils (5) entlang einer Längsrichtung (R) des Faserseils (1) und die Breitseiten (B) des Textils (5) um den Umfang (U) des Faserseils (1) verlaufen und das Textil (5) den zu reparierenden Schaden (4) überdeckt,
- Verbinden der Längsseiten (L) des Textils (5), und
- Vernähen des Textils (5) mit dem Mantel (3).

2. Verfahren nach Anspruch 1, wobei das Textil (5) mit dem Mantel (3) entlang einer der Breitseiten (B) des Textils (5) über zumindest 25%, bevorzugt zumindest 50%, besonders bevorzugt 100%, des Umfangs (U) vernäht wird.

3. Verfahren nach Anspruch 2, wobei das Textil (5) mit dem Mantel (3) auch entlang der anderen Breitseite (B) über zumindest 25%, bevorzugt zumindest 50%, besonders bevorzugt 100%, des Umfangs (U) vernäht wird.

4. Verfahren nach einem der Ansprüche 1 bis 3, wobei das Textil (5) zwischen den Breitseiten (B) über zumindest 25%, bevorzugt zumindest 50%, besonders bevorzugt 100%, des Umfangs (U) vernäht wird.

5. Verfahren nach einem der Ansprüche 1 bis 4, wobei das Verbinden der Längsseiten (L) des Textils (5) durch Vernähen der Längsseiten (L) erfolgt.

6. Verfahren nach Anspruch 5, wobei beim Vernähen der Längsseiten (L) gleichzeitig das Textil (5) mit dem Mantel (3) vernäht wird.

7. Verfahren nach einem der Ansprüche 1 bis 6, wobei zum Vernähen des Textils (5) mit dem Mantel (3) ein Nähgarn verwendet wird, das bevorzugt einen Durchmesser von weniger als 2 mm aufweist.

8. Verfahren nach Anspruch 7 in Verbindung mit Anspruch 5 oder 6, wobei dasselbe ununterbrochene Nähgarn auch zum Verbinden der Längsseiten (L) verwendet wird.

9. Verfahren nach einem der Ansprüche 1 bis 8, wobei das Textil (5) aus demselben Material wie der Mantel (3) gefertigt ist.

10. Verfahren nach einem der Ansprüche 1 bis 9, wobei das Textil (5) entlang seiner Längsseiten (L) Schlaufen (6) aufweist, mittels welcher die Längsseiten (L) verbunden werden.

11. Verfahren nach einem der Ansprüche 1 bis 10, wobei die Länge der Längsseiten (L) jeweils nicht mehr als 50%, bevorzugt nicht mehr als 5%, einer Gesamtlänge des Faserseils (1) entspricht.

12. Verfahren nach einem der Ansprüche 1 bis 11, wobei das Textil (5) eine Dicke (D) hat, welche maximal 25%, bevorzugt maximal 10%, besonders bevorzugt maximal 5%, des Seildurchmessers (d) beträgt.

13. Hochfestes Faserseil (1), das mit einem Verfahren nach einem der Ansprüchen 1 bis 12 repariert wurde.

14. Verwendung eines flächigen, rechteckigen Textils (5) zur Reparatur eines hochfesten Faserseils (1), insbesondere eines hochfesten Faser-Hubseils für Krane, welches einen Seilkern (2), der hochfeste Kunststofffasern oder -litzen umfasst, und einen lokal beschädigten textilen Mantel (3) aufweist, wobei das flächige, rechteckige Textil (5) zwei Breitseiten (B), die jeweils eine Länge von 80% bis 120% eines Umfangs des Faserseils (1) aufweisen, und zwei Längsseiten (L) hat, die jeweils zumindest eine Länge eines zu reparierenden Schadens (4) des beschädigten Mantels (3) aufweisen, und wobei die Längsseiten (L) des Textils (5) verbindbar und das Textil (5) mit dem Mantel (3) vernähbar ist.
